# EUROPEAN PATENT APPLICATION

(11) **EP 0 790 592 A1**
(43) Date of publication of application: **20.08.1997**
(21) Application number: 97300941.8
(22) Date of filing: 13.02.1997
(51) Int. Cl.: G08G 1/0967

(54) **Vehicle safety device**

(30) Priority: 19.02.1996 GB 9603433
(71) Applicant: The BOC Group plc, Windlesham Surrey GU20 6HJ (GB)
(72) Inventor: Garrett, Michael Ernest, Woking, Surrey GU22 7XR (GB)
(74) Representative: MacLean, Martin David

(57) **Abstract**

The present invention provides a vehicle 10 with means 20 for determining a safe approach speed towards road hazards 24 and presenting a visual warning to a vehicle operator so as to enable speed reduction to be initiated before the hazard is reached. Alternatively, automatic control can be initiated over the vehicle brake or throttle controls 30, 32. Vehicle safety is significantly enhanced.

## Description

The present invention relates to a safety device for vehicles and relates particularly but not exclusively to such a device when used to reduce vehicle accidents.

Vehicle roll-over, in particular, liquid filled road tankers presents a danger to both the vehicle driver and other road users as well as a very high expense to an operating company. Tanker roll-over occurs when the lateral G-forces of a tanker are sufficient to move the centre of mass beyond a point at which recovery can be achieved. This problem is particularly difficult to overcome because of the self-righting moment of the vehicle rapidly decreases as the point of instability is approached. These lateral forces occur in two forms, tilt of the vehicle for example caused by road camber and centripetal force for cornering. This latter force is a function of the square of the angular velocity so roll-over is induced by cornering on too tight a radius and at too high a speed.

By taking simple measurements of a vehicle cornering it is possible to predict the maximum safe speed for that vehicle when taking into account road camber, cornering line and radius of curve. The two driver skills associated with cornering are the vehicle line and speed, but even the worst line can be safely negotiated provided that the speed is kept low enough. It is an object of the present invention to provide an apparatus capable of reducing and possibly eliminating the dangers associated with vehicles approaching a road hazard at excessive speeds.

Accordingly, the present invention provides a safety device for vehicles and the like comprising vehicle position monitoring means; vehicle speed monitoring means; information processing means, for processing information data from said position and speed monitoring means and being operable to receive and store data relating to hazards or road conditions and for analysing the position and speed of said vehicle and for comparing them with said hazard data thereby to determine whether said vehicle is approaching said hazard at an acceptable speed and initiating a warning to the vehicle's driver or initiating control over one or more vehicle systems. It will be appreciated that providing such a device would allow a vehicle operator to take appropriate safety steps well before he encounters the hazard in question or, where an automatic vehicle control system is employed, would reduce the vehicles speed thereby preventing an accident.

Conveniently, the vehicle position monitoring means comprises a satellite based global position monitoring system.

Alternatively, the vehicle position monitoring means might comprise a land based position monitoring system.

Conveniently, the vehicle speed monitoring means comprises an onboard speedometer.

Preferably, the information processing means comprises a computer when programmed to analyse the speed and position of the vehicle and compare them with said hazard data and thereby determine whether said vehicle is approaching the hazard at an acceptable speed.

Advantageously, the information processing means may be configured for receiving and storing data relating to the maximum safe vehicle approach speed for each hazard.

Advantageously, the information processing means is configured for receiving vehicle condition information and for varying the maximum safe approach speed in accordance with said vehicle condition information.

In a particularly advantageous arrangement the information processing means is configured for receiving road condition or weather condition information and for varying the maximum safe approach speed in accordance with said road or weather condition information.

Conveniently, the safety device includes a visual display for transmitting a visual warning to the vehicle's operator.

Alternatively, or in addition, the device maybe configured for initiating control over the throttle or brakes of the vehicle thereby to reduce the speed thereof.

The present invention will now be more particularly described by way of example only with reference to the following drawings, in which:
Figure 1 is a pictorial representation of a vehicle equipped with a safety device in accordance with the present invention;
Figure 2 is a schematic representation of components of the present invention;
Figure 3 is a plan view of a road roundabout and illustrates a typical vehicle approach and exit line;
Figure 4 is a plan view of a sharp S bend having an adverse camber in the region of cross section AA; and
Figure 5 is a cross section taken in the direction of lines AA of Figure 4.

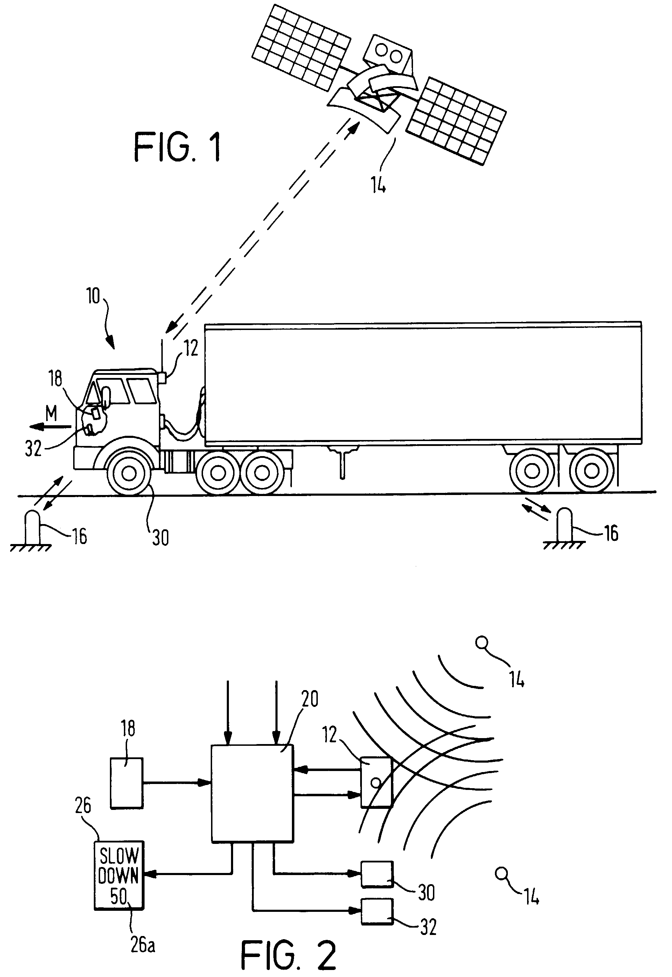

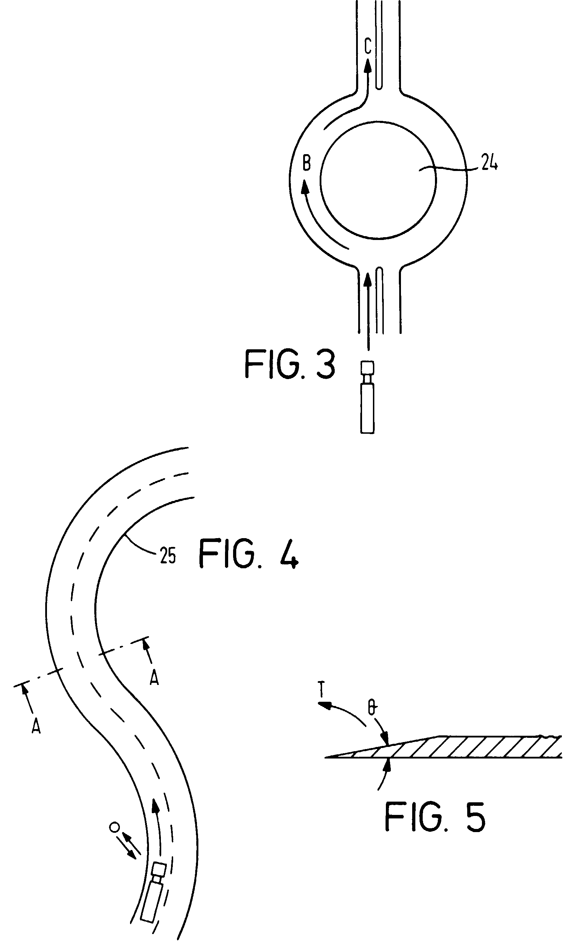

Referring to Figure 1, a vehicle 10 moving in the direction of arrow M is provided with a vehicle position monitoring means part of which is shown at 12. The monitoring means may comprise any one of a number of well known systems such as, for example, a global position monitoring satellite system illustrated in part at 14 and presently employed by both military and civilian operators. Alternatively, the monitoring means may comprise a number of land based detectors or sensors 16 operating in a similar manner to the satellite system. The operation of such systems does not form part of the present invention and is therefore not described in detail herein. However, it will be appreciated that such systems are able to identify vehicles with good precision for navigational purposes and often provide a display or map to the driver showing his position relative to a stored map. Clearly, the present invention must also provide a means for monitoring the vehicle speed which might, conveniently, comprise the vehicles speedometer 18. The system further includes an information processing means in the form of computer or similar such device 20. This processing means 20 is operable to receive and process information data from the position and speed monitoring means and is operable to receive and store data relating to hazards (such as for example roundabout 24 shown in Figure 3) or road conditions and for analysing the position and speed of the vehicle and for comparing them with said hazard data thereby to determine whether the vehicle is approaching the hazard 24 at an acceptable speed. Such processing of information will be undertaken by a suitable computer program or software loaded onto the computer 20 itself. Also linked to the information processing means 20 is a visual display apparatus 26 which is operable to display a warning to the operator should he be approaching a hazard at an inappropriately high speed. Whilst such a display may take any one of a number of forms, it is particularly convenient to employ the screen of a vehicles global position monitoring system which are often placed for maximum visibility by an operator. Typically, the display might display the words "SLOW DOWN" and display an appropriate speed at which the hazard 24 should be approached. Alternatively, the processing means 20 may be operably linked to the brake and/or throttle 30, 32 of the vehicle thereby to initiate control thereof and reduce the vehicle speed automatically as it approaches the hazard. Clearly, this arrangement has the advantage of being able to eliminate any operator overriding the warning system as is possible with the visual display 26. In particularly advanced systems the safety device 12 may employ information processing means 20 configured for receiving storing and utilising data relating to the maximum safe vehicle approach speed for each hazard. This data may be provided by coding each and every hazard on a vehicles route. Additionally, the information processing means 20 maybe configured for receiving storing and utilising vehicle condition information and for varying the maximum safe vehicle approach speed S in accordance with said vehicle condition information. Typical examples of such vehicle condition information would be load weight and load distribution but might also include information relating to the vehicle's braking or handling characteristics. In addition, the information processing means 20 might also be configured for receiving external information such as road condition or weather condition information and for storing and utilising this information so as to vary the maximum safe approach speed in accordance with this further information. Clearly, the safety device is most effective if maximum use is made of all information being inputted thereto. Hence, it would be appropriate for the processing means 20 to include some form of computer program suitable for analysing all this information and for modifying the maximum safe approach speed in response to one or more data input.

In operation, each hazard such as, for example, roundabout 24 or sharp bend 40 shown in Figures 4 and 5 would be graded or coded according to the hazard they might present to a vehicle. This grading or coding would be loaded and stored on processing means 20 before the vehicle commences a particular journey. Further information such as road conditions, weather conditions, and/or vehicle conditions might also be loaded prior to the vehicles departure and/or updated during the journey. For example, a vehicle distributing liquid nitrogen often makes a number of deliveries on route and hence the weight distribution will vary as the journey progresses. This information is fundamentally important to the safe operation of the vehicle and hence should if, if at all possible, be updated when appropriate. Once the journey has commenced, the position of the vehicle is determined by reference to position monitoring apparatus 14, 16 so that its position relative to any hazard 24, maybe determined. The processing means 20 is configured such that upon a vehicle approaching a hazard a signal is sent to either display 26 or to one or more of throttle control or brake system 30, 32 thereby to allow for manual or automatic speed reduction. Clearly, if the vehicle operator is already driving at an appropriate speed this system will take no action other than to maintain its monitoring status.

Turning now briefly to Figures 3 to 5, it will be appreciated that hazards such as roundabouts 24 and sharp bends 25 can present a major hazard to any vehicle but are particularly hazardous if an adverse camber such as that shown in Figure 5 is experienced at the same time. The angle 0 of any adverse camber could result in a significant variation in the vehicle weight distribution and cause the centre of gravity of any load to move in the direction of arrow T of Figure 5. Clearly, the further the load is displaced from its normal rest point the more unstable the vehicle becomes. Consequently, the introduction of such road condition information into the present system will be of significant benefit.

One of the advantages of the present invention is that a driver will naturally tend to modify his driving habits so as to avoid receiving visual warnings of excess speed.

## Claims

1. A safety device for vehicles and the like comprising vehicle position monitoring means and vehicle speed monitoring means, characterised in that information processing means are provided, for processing information data from said position and speed monitoring means and being operable to receive and store data relating to hazards or road conditions and for analysing the position and speed of said vehicle and for comparing them with said hazard data thereby to determine whether said vehicle is approaching said hazard at an acceptable speed and, if not, initiating a warning to the vehicle's driver or initiating control over one or more vehicle systems.

2. A safety device as claimed in Claim 1 in which the vehicle position monitoring means comprises a satellite based global position monitoring system.

3. A safety device as claimed in claim 1 in which the vehicle position monitoring means comprises a land based position monitoring system.

4. A safety device as claimed in Claim 1 or Claim 3 in which the vehicle speed monitoring means comprises an onboard speedometer.

5. A safety device as claimed in any one of Claims 1 to 4 in which the information processing means comprises a computer when programmed to analyse the speed and position of the vehicle and compare them with said hazard data and thereby determine whether said vehicle is approaching the hazard at an acceptable speed.

6. A safety device as claimed in any one of Claims 1 to 5 in which said information processing means is configured for receiving and storing data relating to the maximum safe vehicle approach speed for each hazard.

7. A safety device as claimed in any one of Claim 1 to 6 in which said information processing means is configured for receiving vehicle condition information and for varying the maximum safe approach speed in accordance with said vehicle condition information.

8. A safety device as claimed in any one of Claims 1 to 7 in which said information processing means is configured for receiving road condition or weather condition information and for varying the maximum safe approach speed in accordance with said road or weather condition information.

9. A safety device as claimed in any one of Claims 1 to 8 including a visual display for transmitting a visual warning to the vehicle's operator.

10. A safety device as claimed in any one of Claims 1 to 9 in which the device is configured for initiating control over the throttle or brakes of the vehicle thereby to reduce the speed thereof.
